# EUROPÄISCHE PATENTSCHRIFT

(11) **EP 0 510 470 B1**
(45) Veröffentlichungstag und Bekanntmachung des Hinweises auf die Patenterteilung: **13.03.1996**
(21) Anmeldenummer: 92106334.3
(22) Anmeldetag: 13.04.1992
(51) Int. Cl.: A01F 29/06, A01F 29/12

(54) **Fördervorrichtung**
Conveying device
Dispositif transporteur

(30) Priorität: 22.04.1991 DE 4113052
(43) Veröffentlichungstag der Anmeldung: 28.10.1992
(73) Patentinhaber: DEERE & COMPANY, Moline, Illinois 61265 (US)
(72) Erfinder: Becker, Klaus, W-5502 Schweich (DE); Vogelgesang, Claus-Joseph, W-6676 Heckendalheim (DE); Gross, Stefan, W-6600 Saarbrücken (DE); Hennen, John J., Ottumwa 52501 (US); Williams, Terry A., Batavia 52533 (US)
(74) Vertreter: Feldmann, Bernhard

(56) Entgegenhaltungen:
- DE-A- 1 917 994
- US-A- 1 564 586
- US-A- 4 059 233

## Beschreibung

Die Erfindung betrifft eine Fördervorrichtung für einen Häcksler zwischen einem vorzugsweise von einer Häckseltrommel ausgehenden Eingangsschacht und einem Austragsschacht mit einem Rotor, der Tragelemente und auf diesen starr befestigte Paddel aufweist, wobei der Rotor und die Häckseltrommel zwischen Seitenwänden eines Gehäuses drehbar aufgenommen sind.

Fördervorrichtungen an Häckslern dienen dazu, einem von einer Häckseltrommel zerkleinerten Gut eine zusätzliche oder erste Beschleunigung zu erteilen, damit dieses durch einen Austragsschacht auf einen Anhänger oder dergleichen geworfen wird.

So ist aus der US-A-4 059 233 eine Fördervorrichtung bekannt, die einen starr ausgebildeten Rotor mit vier Paddeln enthält, die auf Winkeleisen montiert sind und das von einer Häckseltrommel direkt empfangene Gut in einen senkrecht verlaufenden Austragsschacht werfen. Die Winkeleisen sind im Bereich einer Welle des Rotors an eine Platte angeschweißt, die den Rotor mit den Winkeleisen seitlich abschließt.

Bei einer derartigen Fördervorrichtung ist es von Nachteil, daß es zu Turbulenzen in dem Rotorraum und zu einer geringen Wurfleistung kommen kann, wenn z. B. nur relativ wenig Gut zu fördern ist oder in dem Eingangsschacht eine hohe Rückströmung herrscht. Es treten ungünstige Strömungsverhältnisse auf, die einen konzentrierten Abwurf des Guts von dem Rotor nicht ermöglichen.

Die DE-U-1 986 843 offenbart eine Häckseltrommel eines Trommelfeldhäckslers mit zwei radial zu einer Welle verlaufenden Scheiben, die an sechs einen gleichen Abstand zueinander aufweisenden Stellen sichelförmig in Spitzen auslaufen. Von den miteinander fluchtenden Spitzen beider Scheiben wird jeweils ein Häckselmesser getragen. Zwischen jedem Häckselmesser und der Welle erstreckt sich ein gekrümmtes Blech, das als Wurfschaufel dienen soll. Jede Scheibe und ein die Häckseltrommel aufnehmendes Gehäuse sind mit Durchbrechungen versehen, die je nach der Stellung der Häckseltrommel miteinander fluchten können. Die Öffnungen in den Scheiben sind derart angeordnet, daß Luft jeweils in eine Kammer zwischen zwei Wurfschaufeln eintreten kann.

Diese Häckseltrommel ist insofern nachteilig, als sich das abgetrennte Gut in den Kammern einnisten kann und durch die Kammerausbildung inhomogene Strömungsverhältnisse im Bereich der Fördervorrichtung eintreten können. Außerdem tritt bei gefüllter Kammer eine Reibung des Guts an der Gehäusewandung auf.

Die der Erfindung zugrunde liegende Aufgabe wird darin gesehen, eine stromabwärts einer Häckseltrommel vorgesehene Fördervorrichtung mit einem guten Strömungsverhalten und geringer Gutreibung vorzuschlagen.

Diese Aufgabe ist erfindungsgemäß durch die Merkmale des Patentanspruchs 1 gelöst worden, wobei in den weiteren Patentansprüchen Merkmale aufgeführt sind, die die Lösung in vorteilhafter Weise weiterentwickeln.

Auf diese Weise kann von dem Rotor Luft angesaugt werden, die das Entstehen eines Unterdrucks abgabeseitig des Rotorraums verhindert und sich dem abgeworfenen Volumenstrom hinzu addiert, so daß genügend "Material" vorhanden ist, das beschleunigt werden kann. Des weiteren wird ein Rückstromdruck eingangsseitig des Rotorraums vermieden. Aufgrund der ermöglichten Beschleunigung bildet das in der Luft enthaltene Gut einen kompakten Strom, der sicher gefördert werden kann. Die Einfügung einer Abrißkante an dem den Rotor umgebenden Mantelstück des Gehäuses bewirkt, daß eine strömungstechnisch günstige Trennung des mit dem Rotor zirkulierenden Luftstroms von dem tangential dazu verlaufenden Luftstrom erfolgt. Auf diese Weise werden Turbulenzen vermieden und eine störungsfreie Gutbeförderung gewährleistet.

Es ist zwar aus der deutsch-österreichischen Patentschrift 76401 bekannt, im Zentrumsbereich eines Rotors sowohl die Seitenwände wie auch den Rotor offen zu gestalten; dort tritt jedoch eine unkontrollierte Luftführung ein, die Tragelemente sind als Leisten ausgebildet und somit schwach, und die Paddel erstrecken sich nicht über die gesamte Länge zwischen den Seitenwänden.

Je nach der zu erwartenden Fördergutmenge und der Beschaffenheit des Förderguts kann die zugeführte Luftmenge verändert werden - manuell oder automatisch.

Eine sehr gute Beschleunigung und günstige Strömungsverhältnisse zwischen den Eingangs- und dem Austragsschacht werden erzielt, wenn die zusätzliche Luft direkt stromabwärts des Gutübernahmebereichs jedenfalls zwischen Eingangs- und Austragsschacht liegt. Vorteilhafterweise befindet sich die Öffnung radial zwischen den Paddeln und der Rotorwelle.

Eine sichelförmige Ausbildung der Außenkanten der Tragbleche verhindert, daß sich zwischen ihnen und der sie umgebenden Wand des Gehäuses Fördergut einklemmen kann, das Reibungsverluste hervorruft.

Da bei rauhem und/oder aggressivem Fördergut an den Paddel Verschleiß auftritt, ist es von Vorteil, daß diese austauschbare Paddelleisten enthalten, die vorzugsweise radial oder im wesentlichen radial verstellbar auf Paddelträgern befestigt werden.

Werden alle vier Kantenbereiche der Paddelleisten oberflächenvergütet, kann jede Paddelleiste insgesamt viermal benutzt werden, bevor sie durch eine neue Paddelleiste ersetzt werden muß.

Eine robuste Ausführung des Rotors, die auch nicht beim Austausch von Paddelleisten beeinträchtigt wird, ist gegeben, wenn sie als ein Schweißzusammenbau, bestehend aus den Tragelementen, den Paddelträgern und einer Welle gebildet ist.

Eine weitere Verbesserung der Austragswirkung wird erzielt, wenn sich der Austragsschacht zu seiner Ausgabeöffnung hin verjüngt, was eine zusätzliche Beschleunigung hervorruft.

Die Flugrichtung des Förderguts und dessen Abreißverhalten vom Rotor kann durch die Verwendung eines Leitblechs nach dem Verlassen des Rotors beeinflußt werden und zwar so sehr, daß das Fördergut die Seiten wechselt und zu der stromabwärts gelegenen Seite des Austragsschachts gelenkt wird, an der es bis zu einer Abgabeöffnung entlanggleitet und als kompakter Gutstrom zusammengehalten wird. Die Anlage des Fördergutstroms an der stromabwärts gelegenen Wand des Austragsförderers wird noch durch dessen entsprechende Neigung zur Vertikalen verstärkt.

Ist das Leitblech derart angeordnet, daß es zu einer stromaufwärts gelegenen Wand des Austragsschachts einen Abstand aufweist und mit einer sich aus dem Gehäuse heraus erstreckenden Lufteinlaßöffnung und einer sich in den Austragsschacht hinein erstreckenden Luftauslaßöffnung versehen ist, kann zusätzlich Luft in den Förderstrom eintreten, die eine Unterdruckbildung verhindert und ein einwandfreies Abfliegen des Guts ermöglicht.

Zwar zeigt bereits die FR-A1-2 455 852 eine zusätzliche Lufteintrittsöffnung; diese befindet sich jeodch bereits stromaufwärts der Häckseltrommel.

Um Reibungsverluste so gering wie möglich zu halten, ist es erforderlich, Wandteile, an denen das Fördergut entlangreibt, in einwandfreiem Zustand zu erhalten. Es ist daher von Vorteil, wenn ein zerschlissener Wandteil - insbesondere der ständig mit Fördergut beschlagene Boden - austauschbar ist, was am einfachsten durch eine Schwenkverbindung mit einem Rahmen oder dem Gehäuse ermöglicht wird.

Zum Geringhalten der Kosten beim Austausch eines Bodenteils und zur Vereinfachung der Arbeit ist es sinnvoll, nur das von dem Fördergut beaufschlagte Blech auszutauschen und einen stabilen Rahmen vorzusehen, auf den das Blech sicher aufgelegt werden kann.

Durch Führungen, z. B. Winkeleisen, Stifte oder dergleichen, die sich von den Seitenwänden erstrecken, kann das Blech in seiner richtigen Krümmung und Lage dauerhaft positioniert werden.

Zwischen den Seitenwänden sich erstreckende Distanzhalter halten diese auf dem erforderlichen Abstand und sorgen somit dafür, daß das Blech nach der Demontage des Rahmens ohne Zwängen demontierbar ist.

Die Distanzhalter können gleichzeitig als Lager für den Rahmen benutzt werden, wenn sie sich durch genügend große Öffnungen, insbesondere Längsschlitze, in dem Rahmen erstrecken.

Eine Kontrolle des Zustands der Paddel und von deren Stellung ist sehr leicht möglich, wenn sich zwischen den Seitenwänden ein den Drehkreis des Rotors teilweise bedeckender, schwenkbarer Deckel erstreckt, der eine Inspektionsöffnung verschließt oder freigibt.

Ein weiterer Zugang zu dem Rotor, dem Blech auf dem Rahmen und dem Eingangsschacht wird dadurch geschaffen, daß ein Abschnitt des Eingangsschachts demontierbar ist, wozu er insbesondere einen um ein Gelenk schwenkbaren Wandteil enthält.

Die erfindungsgemäße Fördervorrichtung läßt auch das Zusammenwirken mit einer Körnernachbehandlungseinrichtung, einem sogenannten Kernel-Processor zu, wenn ein solcher gegen den vorgenannten Abschnitt austauschbar ist.

Für größere Wartungsmaßnahmen ist es sehr vorteilhaft, wenn der Rotor, gegebenenfalls mit dem Abschnitt und sonstigen Teilen des ihn umgebenden Gehäuses von dem Austragsschacht und vorteilhafterweise auch von dem Eingangsschacht getrennt und entfernt werden kann, was dadurch erreicht wird, daß insbesondere der Austragsschacht unabhängig von dem Rotor an einer Konsole gehalten wird.

In der Zeichnung ist ein nachfolgend näher beschriebenes Ausführungsbeispiel der Erfindung dargestellt.

Es zeigt:
- Fig. 1: einen Häcksler mit einer erfindungsgemäßen Fördervorrichtung in Seitenansicht und
- Fig. 2: die Fördervorrichtung in vergrößerter Darstellung und im Vertikalschnitt in Seitenansicht.

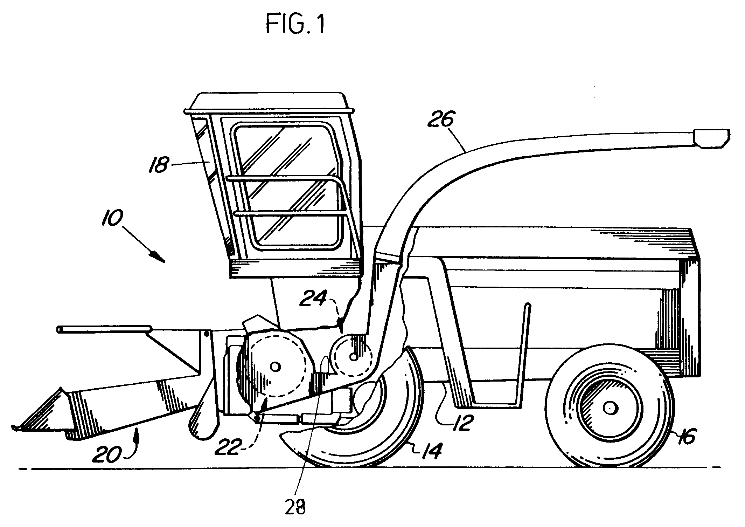

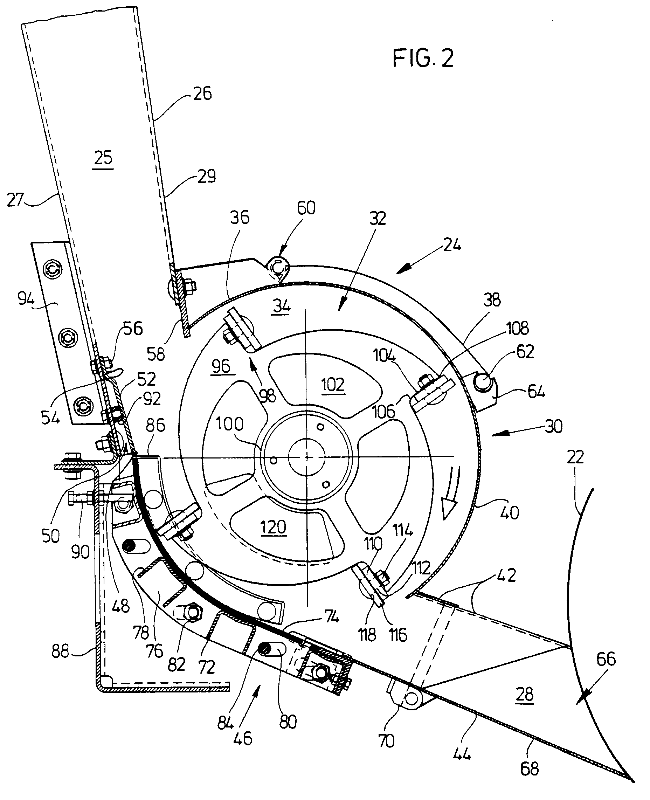

Ein in Figur 1 gezeigter selbstfahrender Häcksler 10 baut sich auf einem Rahmen 12 auf, der von vorderen und rückwärtigen Rädern 14 und 16 getragen wird. Die Bedienung des Häckslers 10 erfolgt von einer Fahrerkabine 18 aus, von der aus eine Erntegutaufnahmevorrichtung 20 einsehbar ist. Mittels der Erntegutaufnahmevorrichtung 20 vom Boden aufgenommenes Gut, z. B. Mais, Gras oder dergleichen wird einer Häckseltrommel 22 zugeführt, die es in kleine Stücke häckselt und es der erfindungsgemäßen Fördervorrichtung 24 aufgibt. Das Gut verläßt den Häcksler 10 zu einem nebenher fahrenden Anhänger über einen drehbaren Austragsschacht 26. Zwischen der Häckseltrommel 22 und der Fördervorrichtung 24 erstreckt sich ein Eingangsschacht 28, durch den das zu fördernde Gut der Fördervorrichtung 24 tangential zugeführt wird. Der Austragsschacht 26 weist neben seitlichen Wänden 25 eine mit Bezug auf die Förderrichtung der Fördervorrichtung 24 stromaufwärts gelegene Wand 27 (mit Blick auf Figur 2, links) und eine dieser gegenüber liegende stromabwärts gelegene Wand 29 auf, die sich mit Blick auf Figur 2 auf der rechten Seite befindet.

Weitere Einzelheiten des Häckslers 10 bedürfen keiner Beschreibung, weil dieser an sich bekannt ist.

Der genaue Aufbau der Fördervorrichtung 24 geht aus Figur 2 hervor.

Gemäß Figur 2 befindet sich die erfindungsgemäße Fördervorrichtung 24 zwischen dem Eingangsschacht 28 und dem Austragsschacht 26 und enthält insbesondere ein Gehäuse 30 und einen Rotor 32.

Das Gehäuse 30 setzt sich zusammen aus zwei Seitenwänden, von denen lediglich die in normaler Fahrtrichtung linke Seitenwand 34 zu sehen ist; die rechte Seitenwand ist jedoch identisch zu der linken Seitenwand 34 ausgebildet. Zwischen den Seitenwänden 34 erstreckt sich in einem oberen Bereich, ausgehend von der stromabwärts gelegenen Wand 29 des Austragsschachts 26, ein starr angeordnetes erstes Mantelstück 36, daran anschließend ein Deckel 38, und auf diesen folgend ein zweites Mantelstück 40, das an eine Decke 42 des Eingangsschachts 28 anschließt. Die Innenflächen der Mantelstücke 36, 40 und des Deckels 38 verlaufen auf einer Kreislinie, die einen geringen Abstand zu dem Rotor 32 aufweist und zu diesem konzentrisch verläuft. An einen Boden 44 des Eingangsschachts 28 schließt sich über ein Bogenmaß von ca. 90° - 100° ein Gehäuseabschnitt 46 an, der mit seiner Innenfläche ebenfalls im wesentlichen der vorgenannten Kreislinie folgt. Der Gehäuseabschnitt 46 endet mit seiner oberen Kante 48 in unmittelbarer Nähe der stromaufwärts gelegenen Wand 27 des Austragsschachts 26, beläßt zu dieser aber einen Spalt 50. Zwischen der Kante 48 und der stromaufwärts liegenden Wand 27 erstreckt sich schließlich ein Leitblech 52, das an letzterer über Laschen 54 und Schrauben 56 befestigt ist. Folglich wird das mit Blick auf die Zeichnung von rechts durch den Eingangsschacht 28 herangeführte Fördergut über den Boden 44, den Gehäuseabschnitt 46, das Leitblech 52 und die stromaufwärts gelegene Wand 27 geführt, von wo aus es auf die stromabwärts gelegene Wand 29 wechselt.

Das erste Mantelstück 36 ist über eine Leiste 58 an die stromabwärts gelegene Wand 29 angeschlossen und trägt an der gegenüberliegenden Endkante ein Teil eines Gelenks 60.

Der Deckel 38 greift mit einem Ende an dem anderen Teil des Gelenks 60 an und ist daher mit dem ersten Mantelteil 36 vertikal schwenkbar verbunden. In einer oberen und in der Zeichnung nicht wiedergegebenen Stellung gibt der Deckel 38 einen Zugang zu dem Rotor 32 für Wartungszwecke frei. An dem dem Gelenk 60 gegenüberliegenden Ende trägt der Deckel 38 eine Stange 62, die in einen mit dem zweiten Mantelstück 40 fest verbundenen Haken 64 einlegbar und mittels nicht gezeigter Schrauben, Stifte, Bolzen oder dergleichen dort festlegbar ist. Auf diese Weise wird verhindert, daß sich der Deckel 38 während des Betriebs selbsttätig öffnet.

Das zweite Mantelstück 40 verschließt den Abschnitt zwischen dem Deckel 38 und der Decke 42 des Eingangsschachts 28.

Die Decke 42 und der Boden 44 des Eingangsschachts 28 führen zu einem Abschnitt 66, der sich bis zu der Häckseltrommel 22 bzw. das sie umgebende Gehäuse erstreckt und im wesentlichen den gleichen Durchlaßquerschnitt aufweist wie der Eingangsschacht 28. Dieser Abschnitt 66 kann ganz demontiert und gegen einen anderen Abschnitt ersetzt werden, in dessen Innern sich eine Körnernachbehandlungseinheit befindet. An der Unterseite des Abschnitts 66 befindet sich darüberhinaus ein Wandteil 68, der an seinem in Figur 2 linken Ende über ein weiteres Gelenk 70 an dem Boden 44 angreift und nach Lösen nicht gezeigter Riegel nach unten wegklappbar ist.

Rückwärtig, d. h. in Figur 2 nach links, schließt sich an den Boden 44 der Gehäuseabschnitt 46 an, der sich vorwiegend aus einem Rahmen 72 und einem Blech 74 zusammensetzt.

Der Rahmen 72 wird von Wangen 76 und mit diesen verschweißten Spangen 78 von U-förmigem Querschnitt gebildet, die nach der Kreisumfangsfläche des Rotors 32 gebildet sind, zu dieser aber einen Abstand einhalten, der mindestens der Dicke des Blechs 74 entspricht. In den Wangen 76 sind mehrere langlochartige Öffnungen 80 vorgesehen, durch die sich Schrauben 82 und Distanzhalter 84 in der Form von Rundstählen erstrecken. Sowohl die Schrauben 82 wie auch die Distanzhalter 84 sind in Bohrungen in den Seitenwänden 34 nunmehr allerdings radial unbeweglich eingesetzt. Während die Schrauben 82 dazu dienen, den Rahmen 72 an den Seitenwänden 34 in der richtigen Stellung festzulegen, sind die Distanzhalter 84 dazu bestimmt, die Seitenwände 34 stets in gleichem Abstand zueinander zu halten, so daß der Rahmen 72 wie auch das Blech 74 zwischen den Seitenwänden 34 für Wartungszwecke bewegt werden kann.

Konzentrisch zu den Wangen 76 sind diesen gegenüber an den Seitenwänden 34 Führungen 86 angebracht, die zu der radial innenliegenden Fläche der Wangen 76 und somit zu der Auflagefläche des Blechs 74 einen Abstand aufweisen, der der Dicke des Blechs 74 entspricht. Die Führungen 86 sind aus gebogenem Winkelstahl gebildet, dessen einer Schenkel an den Seitenwänden 34 angeschraubt ist, während der andere Schenkel geringfügig von den Seitenwänden 34 nach innen absteht; allerdings ist auch ein entsprechend gebogenes Flacheisen verwendbar.

Das Blech 74 ist aus einem Material gebildet, jedenfalls aber mit einer Oberfläche versehen, die eine hohe Festigkeit und somit eine hohe Standzeit besitzen. Je nach der Stärke des Blechs 74 kann dieses entsprechend dem Drehkreis des Rotors 32 vorgebogen sein oder als flaches Blech 74 auf den von dem Rotor 32 weggeschwenkten bzw. weggeschobenen Rahmen 72 gelegt werden. Jedenfalls wird durch ein Verschieben des Rahmes 72 auf den Distanzhaltern 84 bzw. ein Verschwenken um ein gegebenenfalls vorgesehenes Gelenk zu dem Rotor 32 hin das aufgelegte Blech 74 zwischen dem Rahmen 72 und den Führungen 86 in die richtige Form gebracht und reibschlüssig gehalten. Darüberhinaus kommt es an seiner oberen Kante 48 an dem Leitblech 52 und mit seiner unteren Kante an dem Boden 44 zur Anlage, so daß es unverlierbar gehalten ist. Im oberen Bereich des Rahmens 72 ist eine in einem Träger 88 gehaltene Einstellschraube 90 vorgesehen, die eine Feineinstellung des Rahmens 72 und des Blechs 74 gegenüber dem Rotor 32 ermöglicht.

Das Leitblech 52 erstreckt sich über die gesamte Breite der stromaufwärts gelegenen Wand 27 und wird außer mit den Laschen 54 auch mittels gegebenenfalls in der Dicke veränderlichen Distanzhülsen 92 zu dieser auf Abstand gehalten. Lediglich die Laschen 54, die nur einen geringen Teil der Breite des Leitblechs 52 ausmachen, sind auf die Wand 27 zugebogen. Auf diese Weise bleibt der Spalt 50 über die gesamte vertikale Erstreckung des Leitblechs 52 erhalten, und Luft kann von außerhalb des Gehäuses 30 durch den Spalt 50 in das Innere des Austragsschachts 26 gesaugt werden.

Aus Figur 2 ist deutlich zu erkennen, daß die dem Rotor 32 zugelegene Fläche des Leitelements 52, das im wesentlichen Luft leitet, nicht auf der Tangentialen des Gehäuseabschnitts 46 in seinem Abwurfbereich liegt, sondern von diesem divergiert. Dem von dem Rotor 32 abgeworfenen Gut wird daher eine Richtung zu der Wand 29 hin erteilt, an der es bis zum Verlassen des Austragsschachts 26 entlangstreift und somit nicht zu einem diffusen Materialstrom zerfällt.

Die Leiste 58 reicht bis nahezu an den Drehkreis des Rotors 32 heran und bildet dort eine Abrißkante für den mit dem Rotor 32 drehenden Luftzylinder.

Ferner ist Figur 2 zu entnehmen, daß der Austragsschacht 26 mit seiner stromaufwärts gelegenen Wand 27 an einer Konsole 94 festgemacht ist und somit auch gehalten wird, wenn das Gehäuse 30 für Wartungszwecke ausgebaut werden sollte.

Der Rotor 32 setzt sich vorwiegend aus Tragelementen 96, Paddeln 98 und einer Welle 100 zusammen, die sich zwischen den Seitenwänden 34 erstrecken und gemeinsam um eine Drehachse drehen.

Bei diesem Ausführungsbeispiel sind mit axialem Abstand drei Tragelemente 96 auf die Welle 100 aufgeschweißt und zu dieser radial ausgerichtet. Die Tragelemente 96 sind zwar scheibenförmig gestaltet, sie enthalten aber in jedem 90°-Sektor eine nierenförmige Durchbrechung 102, die einen wesentlichen Teil jeder Sektorfläche einnimmt. Zudem endet der verbleibende Teil des Tragelements 96 nicht auf einem Kreisbogen, sondern weist radial verlaufende Stege 104 auf, die sich ungefähr über ein Fünftel des Radius' erstrecken und eine Innen- und eine Außenkante 106, 108 aufweisen. Zwischen den Stegen 104 verläuft die Außenkante der Tragelemente 96 jeweils derart, daß sie an der Außenkante 108 des voreilenden Stegs 104 beginnt und mit stets geringer werdendem Durchmesser an der Innenkante 106 des nachfolgenden Stegs 104 endet. Bei dem gezeigten Ausführungsbeispiel sind vier Paddel 98 vorgesehen, so daß sich auch vier sichelförmig verlaufende Außenkanten an den Tragelementen 96 ergeben.

An die Stege 104 ist flach anliegend und sich somit radial erstreckend jeweils ein Paddelträger 110 angeschweißt, der sich über die gesamte Länge der Paddel 98 erstreckt und die Tragelemente 96 untereinander verbindet. Nach alledem sind die Tragelemente 96 einerseits mit der Welle 100 und andererseits mit den Paddelträgern 110 verschweißt und ergeben somit einen robusten Drehkörper in offener Bauweise. Die Paddelträger 110 sind mit Bohrungen 112 für Schrauben 114 versehen.

Die Paddel 98 enthalten neben den Paddelträgern 110 auch Paddelleisten 116, die auf letzteren mittels der Schrauben 114 befestigt werden. Hierzu sind in den Paddelleisten 116 Langlöcher 118 vorgesehen, die eine radiale Einstellung der Paddelleisten 116 in bezug auf das Gehäuse 30 erlauben.

Die Welle 100 erstreckt sich durch geeignete Öffnungen in den Seitenwänden 34 in entsprechende Lagervorrichtungen und ist mit einer hohen Drehzahl über eine nicht gezeigte Riemenscheibe antreibbar.

In den Seitenwänden 34 ist ebenfalls eine Öffnung 120 vorgesehen, die je nach der Stellung des Rotors 32 mit einer der Durchbrechungen 102 in den Tragelementen 96 fluchten kann. Allerdings ist der Durchlaßquerschnitt der Öffnungen 120 etwas größer als der der Durchbrechungen 102. Die Öffnungen 120 befinden sich bei diesem Ausführungsbeispiel jeweils im oder wesentlich im ersten Quadranten, d. h. 90°-Sektor, stromabwärts des Eingangsschachts 28. Es ist - allerdings ohne Darstellung - auch möglich, an der Außenseite der Seitenwände 34 ein verschiebbares Stellblech oder dergleichen vorzusehen, mit dessen Hilfe der Durchlaßquerschnitt verkleinert oder verlagert werden kann. Eine derartige Verstellung könnte manuell, gegebenenfalls von der Fahrerkabine 18 aus, oder automatisch in Abhängigkeit von bestimmten eintretenden Gegebenheiten erfolgen.

Nach alledem zeigt sich, daß der in Pfeilrichtung drehende Rotor 32 zu dem Gut aus dem Einlaßschacht 28 durch die Öffnungen 120 und die Durchbrechungen 102 zusätzlich Luft ansaugen kann, das den Volumenstrom anreichert und eine problemlose Abgabe des Guts in den Austragsschacht 26 sowie einen kompakten Materialstrom innerhalb des Austragsschachts 26 gewährleistet.

Zudem wird vermieden, daß Luft in den Eingangsschacht 28 zurückgeblasen wird, die die Gutannahme verhindert. Es entsteht vielmehr ein Sog, der mit dem Förderdruck in dem Austragsschacht 28 für ausgewogene Strömungsverhältnisse sorgt.

## Patentansprüche

1. Fördervorrichtung (24) für einen Häcksler (10) zwischen einem vorzugsweise von einer Häckseltrommel (22) ausgehenden Eingangsschacht (28) und einem Austragsschacht (26) mit einem Rotor (32), der Tragelemente (96) und auf diesen starr befestigte Paddel (98) aufweist, wobei der Rotor (32) und die Häckseltrommel (22) zwischen Seitenwänden (34) eines Gehäuses (30) drehbar aufgenommen sind, dadurch gekennzeichnet, daß die Tragelemente (96) scheibenförmig ausgebildet sind, daß die sich radial erstreckenden Flächen der Tragelemente (96) Durchbrechungen (102) aufweisen und die Seitenwände (34) jeweils wenigstens eine Öffnung (120) enthalten und daß im stromabwärts gelegenen Übergangsbereich zwischen dem Austragsschacht (26) und einem den Rotor (32) bedeckenden Mantelstück (36) des Gehäuses (30) eine sich zu dem Drehkreis der Paddel (98) erstreckende Leiste (58) zum Bilden einer Abrißkante vorgesehen ist.

2. Fördervorrichtung nach Anspruch 1, dadurch gekennzeichnet, daß die Öffnungen (120) in ihrem Durchlaßquerschnitt veränderbar sind.

3. Fördervorrichtung nach Anspruch 1 oder 2, dadurch gekennzeichnet, daß sich die Öffnungen (120) in Förderrichtung gesehen vorzugsweise in dem ersten 90°-Sektor stromabwärts des Eingangsschachts (28) befinden.

4. Fördervorrichtung nach einem oder mehreren der vorherigen Ansprüche, dadurch gekennzeichnet, daß die Außenkanten der Tragelemente (96) sichelförmig, d. h. mit stets vergrößerndem Durchmesser von nahe einer radialen Innenkante (106) im Bereich eines Paddels (98) zu radial nahe einer Außenkante (108) im Bereich eines folgenden Paddels (98) verlaufen.

5. Fördervorrichtung nach einem oder mehreren der vorherigen Ansprüche, dadurch gekennzeichnet, daß die Paddel (98) aus einem Paddelträger (110) und einer Paddelleiste (116) bestehen.

6. Fördervorrichtung nach Anspruch 5, dadurch gekennzeichnet, daß die Paddelleiste (116) auf dem Paddelträger (110) radial verstellbar ist.

7. Fördervorrichtung nach Anspruch 5 oder 6, dadurch gekennzeichnet, daß die Paddelleiste (116) derart oberflächenvergütet ist, daß sie vierfach verwendbar auf den Paddelträger (110) aufsetzbar ist.

8. Fördervorrichtung nach einem oder mehreren der vorherigen Ansprüche, dadurch gekennzeichnet, daß der Rotor (32) als ein Schweißzusammenbau, bestehend aus den Tragelementen (96), den Paddelträgern (110) und einer Welle (100) gebildet ist.

9. Fördervorrichtung nach einem oder mehreren der vorherigen Ansprüche, dadurch gekennzeichnet, daß der Austragsschacht (26) sich zu einer Abgabeöffnung verjüngend ausgebildet ist.

10. Fördervorrichtung nach einem oder mehreren der vorherigen Ansprüche, dadurch gekennzeichnet, daß im stromaufwärts gelegenen Übergangsbereich zwischen dem Austragsschacht (26) und dem den Rotor (32) aufnehmenden Gehäuse (30) ein Leitblech (52) vorgesehen ist.

11. Fördervorrichtung nach Anspruch 10, dadurch gekennzeichnet, daß das Leitblech (52) zu einer stromaufwärts gelegenen Wand (27) des Austragsschachts (26) einen Abstand aufweist und somit einen sich aus dem Gehäuse (30) heraus und in den Austragsschacht (26) hinein erstreckenden Spalt (50) bildet.

12. Fördervorrichtung nach einem oder mehreren der vorherigen Ansprüche, dadurch gekennzeichnet, daß wenigstens ein den Rotor (32) insbesondere nach unten abschirmender Gehäuseabschnitt (46) demontierbar ist.

13. Fördervorrichtung nach Anspruch 12, dadurch gekennzeichnet, daß der Gehäuseabschnitt (46) beweglich, insbesondere schwenkbar oder verschiebbar ist.

14. Fördervorrichtung nach Anspruch 12 oder 13, dadurch gekennzeichnet, daß der Gehäuseabschnitt (46) aus einem Blech (74) und einem Rahmen (72) besteht, auf den das Blech (74) auflegbar ist.

15. Fördervorrichtung nach Anspruch 14, dadurch gekennzeichnet, daß an den Seitenwänden (34) des Gehäuses (30) Führungen (86) vorgesehen sind, an die das Blech (74) anlegbar ist.

16. Fördervorrichtung nach einem oder mehreren der vorherigen Ansprüche 12 bis 15, dadurch gekennzeichnet, daß sich zwischen den Seitenwänden (34) Distanzhalter (84) erstrecken.

17. Fördervorrichtung nach Anspruch 14, 15 oder 16, dadurch gekennzeichnet, daß der Rahmen (72) Öffnungen (80) aufweist, durch die sich die Distanzhalter (84) erstrecken.

18. Fördervorrichtung nach einem oder mehreren der vorherigen Ansprüche, dadurch gekennzeichnet, daß die in Förderrichtung des Rotors (32) gesehen stromabwärts liegende Wand (27) des Austragsschachts (26) derart zu einer Vertikalen geneigt verläuft, daß das Fördergut nach dem Verlassen des Leitblechs (52) an ihr zur Anlage kommt.

19. Fördervorrichtung nach einem oder mehreren der vorherigen Ansprüche, dadurch gekennzeichnet, daß sich zwischen den Seitenwänden (34) ein den Drehkreis des Rotors (32) teilweise bedeckender schwenkbarer Deckel (38) erstreckt.

20. Fördervorrichtung nach einem oder mehreren der vorherigen Ansprüche, dadurch gekennzeichnet, daß ein Abschnitt (66) des Eingangsschachts (28) demontierbar ist.

21. Fördervorrichtung nach Anspruch 20, dadurch gekennzeichnet, daß der Abschnitt (66) einen um ein Gelenk (70) schwenkbaren Wandteil (68) enthält.

22. Fördervorrichtung nach Anspruch 20 oder 21, dadurch gekennzeichnet, daß der Abschnitt (66) gegen einen eine Körnernachbehandlungseinrichtung enthaltenden Abschnitt austauschbar ist.

23. Fördervorrichtung nach einem oder mehreren der vorherigen Ansprüche, dadurch gekennzeichnet, daß der Austragsschacht (26) an einer Konsole (94) befestigt und von dem Gehäuse (30) trennbar ist.

## Claims

1. Conveying device (24) for a chopper (10) between an input chute (28) preferably extending from a cutter head (22) and a discharge chute (26) with a rotor (32) which comprises supporting elements (96) and paddles (98) rigidly mounted thereon, wherein the rotor (32) and the cutter head (22) are held rotatably between side walls (34) of a housing (30), characterized in that the supporting elements (96) are disc-shaped, in that the radially extending faces of the supporting elements (96) comprise apertures (102) and the side walls (34) in each case contain at least one opening (120) and in that in the downstream transition region between the discharge chute (26) and a casing piece (36) of the housing (30) covering the rotor (32) is provided a strip (58) extending to the circle described by the paddles (98) to form a break edge.

2. Conveying device according to claim 1, characterized in that the openings (120) are variable in their throughput cross-section.

3. Conveying device according to claim 1 or 2, characterized in that the openings (120) as seen in the direction of conveying are preferably located in the first 90° sector downstream of the input chute (28).

4. Conveying device according to one or more of the preceding claims, characterized in that the outside edges of the supporting elements (96) extend in a crescent shape, i.e. with constantly increasing diameter from close to a radial inside edge (106) in the region of a paddle (98) to radially close to an outside edge (108) in the region of a following paddle (98).

5. Conveying device according to one or more of the preceding claims, characterised in that the paddles (98) consist of a paddle support (110) and a paddle strip (116).

6. Conveying device according to claim 5, characterized in that the paddle strip (116) is radially displaceable on the paddle support (110).

7. Conveying device according to claim 5 or 6, characterized in that the paddle strip (116) is coated in such a way that it can be mounted on the paddle support (110) so that it can be used four times.

8. Conveying device according to one or more of the preceding claims, characterized in that the rotor (32) is formed as a welded assembly, consisting of the supporting elements (96), the paddle supports (110) and a shaft (100).

9. Conveying device according to one or more of the preceding claims, characterised in that the discharge chute (26) tapers to a delivery opening.

10. Conveying device according to one or more of the preceding claims, characterized in that in the upstream transition region between the discharge chute (26) and the housing (30) containing the rotor (32) is provided a baffle plate (52).

11. Conveying device according to claim 10, characterized in that the baffle plate (52) is spaced apart from an upstream wall (27) of the discharge chute (26) and thus forms a gap (50) extending out of the housing (30) and into the discharge chute (26).

12. Conveying device according to one or more of the preceding claims, characterized in that at least one housing section (46) which shields the rotor (32) particularly from below can be dismounted.

13. Conveying device according to claim 12, characterised in that the housing section (46) is movable, particularly pivotable or slidable.

14. Conveying device according to claim 12 or 13, characterised in that the housing section (46) consists of a metal sheet (74) and a frame (72) on which the metal sheet (74) can be laid.

15. Conveying device according to claim 14, characterized in that on the side walls (34) of the housing (30) are provided guides (86) to which the metal sheet (74) can be applied.

16. Conveying device according to one or more of the preceding claims 12 to 15, characterised in that spacers (84) extend between the side walls (34).

17. Conveying device according to claim 14, 15 or 16, characterised in that the frame (72) comprises openings (80) through which the spacers (84) extend.

18. Conveying device according to one or more of the preceding claims, characterised in that the wall (27) of the discharge chute (26) which is downstream as seen in the direction of conveying of the rotor (32) is inclined from a vertical line in such a way that the material to be conveyed after leaving the baffle plate (52) comes into abutment with it.

19. Conveying device according to one or more of the preceding claims, characterized in that between the side walls (34) extends a pivotable cover (38) partially covering the circle described by the rotor (32).

20. Conveying device according to one or more of the preceding claims, characterized in that a section (66) of the input chute (28) can be dismounted.

21. Conveying device according to claim 20, characterised in that the section (66) contains a wall portion (68) pivotable about a joint (70).

22. Conveying device according to claim 20 or 21, characterized in that the section (66) can be exchanged for a section containing a grain post-treatment device.

23. Conveying device according to one or more of the preceding claims, characterized in that the discharge chute (26) is attached to a bracket (94) and can be separated from the housing (30).

## Revendications

1. Dispositif de convoyage (24) pour une hacheuse (10), disposé entre un conduit d'entrée (28) s'étendant de préférence à partir d'un tambour (22) de la hacheuse, et un conduit de sortie (26), et comportant un rotor (32) qui possède des éléments de support (96) et des palettes (98) fixées rigidement à ces éléments de support, le rotor (32) et le tambour (22) de la hacheuse étant logés, de manière à pouvoir tourner, entre des parois latérales (34) d'un carter (30), caractérisé en ce que les éléments de support (96) sont réalisés en forme de disques, que les surfaces, qui s'étendent radialement, des éléments de support (96) possèdent des ouvertures (102) et que les parois latérales (34) contiennent chacune au moins une ouverture (120), et que dans la zone de jonction, qui est située sur le côté aval, entre le conduit de sortie (26) et un élément d'enveloppe (36), qui recouvre le rotor (32), du carter (30), est prévue une barrette (58) qui s'étend en direction du cercle de rotation des palettes (98) et sert à former un bord d'arrachement.

2. Dispositif de convoyage selon la revendication 1, caractérisé en ce que la section transversale de passage des ouvertures (120) peut être modifiée.

3. Dispositif de convoyage selon la revendication 1 ou 2, caractérisé en ce que les ouvertures (120) sont situées de préférence dans le premier secteur de 90° en aval du conduit d'entrée (28), lorsqu'on regarde dans la direction de convoyage.

4. Dispositif de convoyage selon une ou plusieurs des revendications précédentes, caractérisé en ce que les bords extérieurs des éléments de support (96) s'étendent en forme de faux, c'est-à-dire avec un diamètre qui augmente de plus en plus depuis la zone proche d'un bord intérieur radial (106) au voisinage d'une palette (98) en direction d'une zone proche, dans le sens radial, d'un bord extérieur (108) au voisinage d'une palette suivante (98).

5. Dispositif de convoyage selon une ou plusieurs des revendications précédentes, caractérisé en ce que les palettes (98) sont constituées par un porte-palette (110) et par une barrette de palette (116).

6. Dispositif de convoyage selon la revendication 5, caractérisé en ce que la barrette de palette (116) est déplaçable radialement sur le support de palette (110).

7. Dispositif de convoyage selon la revendication 5 ou 6, caractérisé en ce que la barrette de palette (116) comporte un ennoblissement de surface tel qu'elle peut être montée, en pouvant être utilisée quatre fois, sur le porte-palette (110).

8. Dispositif de convoyage selon une ou plusieurs des revendications précédentes, caractérisé en ce que le rotor (32) est agencé sous la forme d'un assemblage soudé constitué par les éléments de support (96), les supports de palettes (110) et un arbre (100).

9. Dispositif de convoyage selon une ou plusieurs des revendications précédentes, caractérisé en ce que le conduit de sortie (26) est agencé de telle sorte qu'il se rétrécit en direction d'une ouverture d'évacuation.

10. Dispositif de convoyage selon une ou plusieurs des revendications précédentes, caractérisé en ce qu'une chicane (52) est prévue dans la zone de jonction, située en amont, entre le conduit de sortie (26) et le carter (30) logeant le rotor (32).

11. Dispositif de convoyage selon la revendication 10, caractérisé en ce que la chicane (52) est située à une certaine distance d'une paroi (27), située en amont, du conduit de sortie (26) et forme par conséquent une fente (50), qui s'étend à partir du carter (30) pour pénétrer dans le conduit de sortie (26).

12. Dispositif de convoyage selon une ou plusieurs des revendications précédentes, caractérisé en ce qu'au moins une section (46) du carter, qui protège le rotor (32) notamment vers le bas, est démontable.

13. Dispositif de convoyage selon la revendication 12, caractérisé en ce que la section (46) du carter est déplaçable, et notamment peut pivoter ou est déplaçable en translation.

14. Dispositif de convoyage selon la revendication 12 ou 13, caractérisé en ce que la section (46) du carter est constituée par une tôle (74) et un cadre (72), sur lequel la tôle (74) peut être appliquée.

15. Dispositif de convoyage selon la revendication 14, caractérisé en ce que sur les parois latérales (34) du carter (30) sont prévus des guides (86), contre lesquels la tôle (74) peut être appliquée.

16. Dispositif de convoyage selon une ou plusieurs des revendications 12 à 15, caractérisé en ce que des entretoises (84) s'étendent entre les parois latérales (34).

17. Dispositif de convoyage selon la revendication 14, 15 ou 16, caractérisé en ce que le cadre (72) comporte des ouvertures (80) que traversent les entretoises (84).

18. Dispositif de convoyage selon une ou plusieurs des revendications précédentes, caractérisé en ce que la paroi (27) du conduit de sortie (26), qui est située en aval lorsqu'on regarde dans la direction d'entraînement du rotor (32), est inclinée par rapport à la verticale de telle sorte que la matière entraînée vient s'appliquer contre la paroi après avoir quitté la chicane (52).

19. Dispositif de convoyage selon une ou plusieurs des revendications précédentes, caractérisé en ce qu'un capot pivotant (38), qui englobe en partie le cercle de rotation du rotor (32), s'étend entre les parois latérales (34).

20. Dispositif de convoyage selon une ou plusieurs des revendications précédentes, caractérisé en ce qu'une section (66) du conduit d'entrée (28) est démontable.

21. Dispositif de convoyage selon la revendication 20, caractérisé en ce que la section (66) contient un élément de paroi (68) pouvant pivoter autour d'une articulation (70).

22. Dispositif de convoyage selon la revendication 20 ou 21, caractérisé en ce que la section (66) peut être remplacée par une section contenant un dispositif de post-traitement des grains.

23. Dispositif de convoyage selon une ou plusieurs des revendications précédentes, caractérisé en ce que le conduit de sortie (26) est fixé à une console (94) et peut être séparé du carter (30).
